# EUROPÄISCHE PATENTSCHRIFT

(11) **EP 0 602 397 B1**
(45) Veröffentlichungstag und Bekanntmachung des Hinweises auf die Patenterteilung: **20.03.1996**
(21) Anmeldenummer: 93118407.1
(22) Anmeldetag: 13.11.1993
(51) Int. Cl.: B25F 3/00, B25F 5/00, F01D 5/00, B23B 51/10, B23Q 5/04, B23Q 17/24

(54) **Instrument zum Bearbeiten der Oberfläche von Teilen in technischen Hohlräumen**
Instrument for machining the surface of parts inside machine bodies
Instrument pour l'usinage de la surface de pièces dans des espaces creux techniques

(30) Priorität: 11.12.1992 DE 4241767
(43) Veröffentlichungstag der Anmeldung: 22.06.1994
(73) Patentinhaber: Richard Wolf GmbH, D-75438 Knittlingen (DE)
(72) Erfinder: Diener, Jörg, D-75038 Oberderdingen (DE)
(74) Vertreter: Wilcken, Thomas, Dipl.-Ing.

(56) Entgegenhaltungen:
- EP-A- 0 426 527
- DE-A- 2 206 935
- DE-A- 3 710 140
- US-A- 3 802 420
- DATABASE WPI Week 8807, Derwent Publications Ltd., London, GB; AN 86-100538 & US-A-4 721 012 (ALECOOP)
- DATABASE WPI Week 7912, Derwent Publications Ltd., London, GB; AN 77-H5426Y & US-A-4 143 489 (SONICAM ET AL.) 1900

## Beschreibung

Die Erfindung geht aus von einem Instrument zum Bearbeiten der Oberfläche von Teilen in technischen Hohlräumen mit einem Werkzeug unter gleichzeitig möglicher Betrachtung des Bearbeitungsortes mit einer Optik, bestehend aus einem starren, die Optik aufnehmenden Schaft, an dem distal ein Kopf angelenkt ist, der das Werkzeug trägt und relativ zur Längsachse des Instrumentes verschwenkbar ist, wobei das Werkzeug mit einem Antrieb über durch den Schaft verlaufende Kraftübertragungsmittel antreibbar ist.

Mit Hilfe derartiger Instrumente ist es möglich, Reparaturen beispielsweise an Triebwerksschaufeln von Turbinentriebwerken durch-zuführen, ohne einen zeit- und damit kostenintensiven Aus- und Einbau vornehmen zu müssen. Zu diesem Zweck sind Inspektionslöcher in dem Turbinengehäuse vorgesehen, durch die solche Instrumente in das Gehäuse einführbar sind, so daß z.B. kleine Einschläge an den Vorderkanten oder Hinterkanten der Schaufeln bearbeitet werden können.

Ein Instrument der vorerwähnten Art ist in der EP-A-0 426 527 offenbart. Bei diesem Instrument ist die Grundeinheit ein Technoskop, welches mit einem durch den Schaft geführten Werkzeugträger mit einem ausschwenkbaren Kopf als Werkzeughalter versehen ist. Dieser ist mittels einer in dem Träger geführten Betätigungsstange von der Instrumentenhandhabe aus ausstellbar und kann an seinem Ende ein Bearbeitungswerkzeug aufnehmen. Der Werkzeugträger ist motorisch in Längsschwingung versetzbar, so daß eine Bearbeitung durch hin- und hergehende Oszillationsbewegung des Bearbeitungswerkzeuges vorgenommen werden kann. Nachteilig ist, daß mit diesem Instrument eine nur geringe Bearbeitungsintensität erreichbar ist, was die Bearbeitung relativ zeitaufwendig macht.

Ein weiteres bekanntes Instrument hat ein mit Anschlüssen für Kamera und Beleuchtung ausgestattetes Technoskop mit einem starren Schaft und einer biegesteuerbaren flexiblen Spitze. Dieses Technoskop ist dahingehend modifiziert, daß in der Spitze eine sich axial erstreckende rotierende Werkzeugaufnahme gelagert ist, die über eine durch den Schaft geführte biegsame Welle mittels eines an dem Handstück des Technoskops angeordneten Motors antreibbar ist. Bei diesem Instrument ist nachteilig, daß es nicht eng genug abgewinkelt werden kann und die systembedingte Weichheit eine präzise Führung während der Bearbeitung nicht zuläßt.

Es ist die Aufgabe der Erfindung, ein robustes Instrument mit abwinkelbarem Kopf zur Aufnahme eines Werkzeuges zu schaffen, welches bei vergleichsweise hoher Bearbeitungsintensität präzise führbar ist.

Diese Aufgabe wird ausgehend von einem Instrument der einleitend erwähnten Art erfindungsgemäß dadurch gelöst, daß das Werkzeug in an sich bekannter Weise rotierend antreibbar ist, daß die Kraftübertragungsmittel aus einem Riemen bestehen, der um eine auf der Welle des Antriebes sitzende erste Riemenscheibe und um eine zweite Riemenscheibe verläuft, die am Kopf angeordnet und mit diesem verschwenkbar ist, daß die zweite Riemenscheibe und das Werkzeug auf gleicher Drehachse liegen, daß beide Riemenscheiben bei um 90° zur Instrumentenlängsachse verschwenkter Position des Kopfes in gleicher Ebene liegen und daß Mittel vorgesehen sind, die ein Abspringen des Riemens von der zweiten Riemenscheibe bei anderen Positionen des Kopfes verhindern.

Dabei kann vorzugsweise der das Werkzeug tragende Kopf über eine Schwenklagerung mit dem Schaft verbunden und zwischen einer mit diesem fluchtenden Ruhestellung und einer um 90° abgewinkelten Betriebsstellung verschwenkbar sein, wobei die Abwinkelung des Kopfes durch stangenförmige Verstellmittel erfolgt, die durch den Schaft verlaufen und exzentrisch zu der Schwenklagerung an dem Kopf angreifen, während sie an ihrem proximalen Ende mit einem Schieber verbunden sein können, der in einem Gehäuse geführt über eine Stellspindel zwischen Anschlägen verstellbar ist, deren hinterer die Arbeitsstellung und deren vorderer die Ruhestellung des Kopfes bestimmt. Der Antrieb des Werkzeuges kann über einen Rundriemen durch einen Elektromotor erfolgen, der zum Spannen des Riemens an dem Gehäuse in Achsrichtung des Schaftes längs verstellbar geführt und kraftschlüssig fixierbar ist. Anstelle eines Rundriemens können auch andere äquivalente Kraftübertragungsmittel zur Anwendung kommen, wie beispielsweise Zahnriemen, Keilriemen, und dergleichen, die kraftschlüssig und ggf. auch formschlüssig mit den zugehörigen Antriebs- und Abtriebsmitteln in Verbindung stehen.

Das mit diesen Merkmalen ausgestattete Instrument bietet entscheidende Vorteile. So ergibt sich ein recht stabiles Instrument, das sicher funktioniert und in der Lage ist, bei relativ kleinem Durchmesser vergleichsweise große Bearbeitungskräfte aufzunehmen und zu übertragen, so daß mit einem solchen Instrument je nach verwendetem Werkzeug präzise geschliffen, gefräst, gebohrt und poliert werden kann. Dabei kann der Bearbeitungsort mit einer Optik ständig betrachtet werden, die in einem gesonderten Kanal in dem Schaft einführbar ist und ein Technoskop in starrer Ausführung oder mit flexibler und biegesteuerbarer Spitze sein kann und auch mit Beleuchtungsmitteln versehen ist.

Weitere bevorzugte Ausführungsmerkmale sind den Unteransprüchen zu entnehmen.

Die Erfindung wird nachstehend anhand eines in der Zeichnung dargestellten Ausführungsbeispiels näher erläutert. Es zeigen:
- Figur 1: eine Gesamtansicht des erfindungsgemäßen, mit einem starren Technoskop bestückten Instrument mit in Arbeitsstellung befindlichem Werkzeug, das ganze teilweise geschnitten dargestellt,
- Figur 2: eine Seitenansicht des Instruments nach Figur 1 mit einem flexiblen Technoskop mit biegesteuerbarer Spitze, teilweise geschnitten dargestellt,
- Figur 3: einen Längsschnitt durch den Endbereich des Instruments nach Figur 1 in vergrößertem Maßstab,
- Figur 4: das Instrument entsprechend Figur 3 mit in Einführstellung befindlichem Kopf,
- Figur 5: eine Draufsicht auf den Endbereich des Instruments nach Figur 3, längsgeschnitten dargestellt,
- Figur 6: eine Stirnansicht zu Figur 5, einen Teilschnitt längs der Schnittlinie VI-VI (Figur 5) zeigend,
- Figur 7: einen Querschnitt durch das Instrument nach Figur 4 längs der Schnittlinie VII-VII und
- Figur 8: eine der Figur 7 entsprechende Schnittdarstellung einer anderen Ausführungsform eines erfindungsgemäßen Instrumentes.

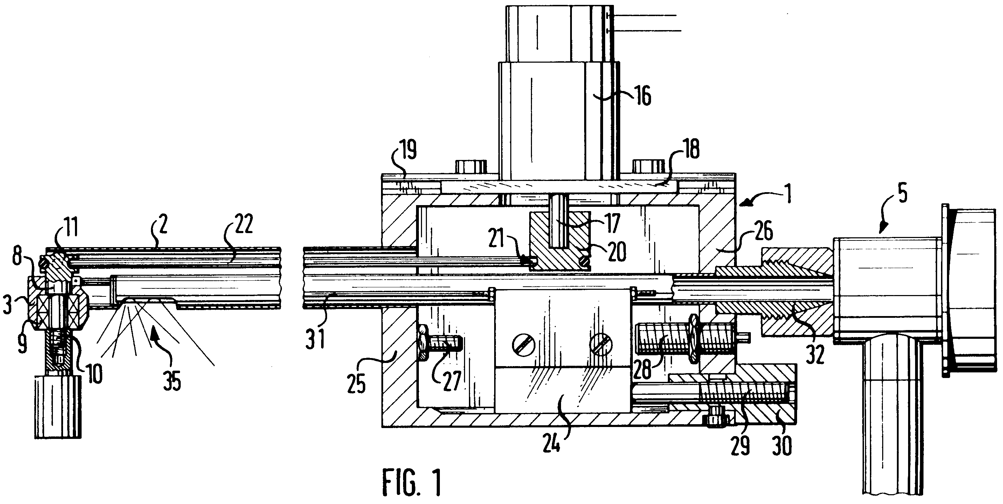

Das erfindungsgemäße Instrument besteht nach Figur 1 aus einem Gehäuse 1, einem an diesem distalseitig angeordneten rohrförmigen Schaft 2 mit einem an dessen distalem Ende angebrachten und mit einem Werkzeug 4 bestückbaren Kopf 3 und einem proximalseitig in das Gehäuse 1 und den Schaft 2 einführbaren Technoskop 5.

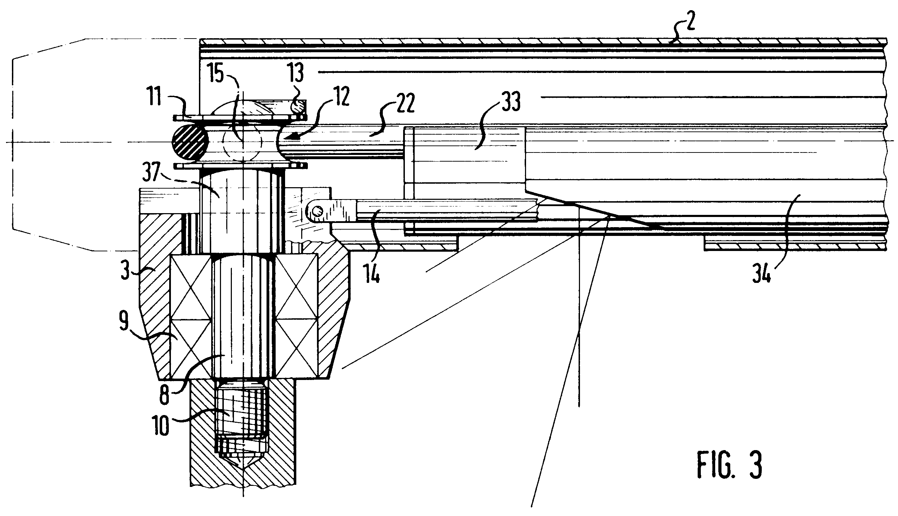

Wie in den Figuren 3, 4 und 6 deutlicher erkennbar, ist der Kopf 3 im wesentlichen zylinderförmig und an seinem proximalen Ende als Gabel mit zwei Gabelschenkeln 6 ausgebildet. Jeder Gabelschenkel 6 weist eine Bohrung auf, deren Achsen miteinander fluchten und jeweils einen Lagerbolzen 7 aufnehmen, der nach außen aus seinem Gabelschenkel 6 herausragt. In dem Kopf 3 ist eine in Kugellagern 9 abgestützte Welle 8 gelagert, deren Achse mit der Längsachse des Kopfes 3 zusammenfällt. Die Welle 8 ragt distalseitig aus dem Kopf 3 heraus und ist dort mit einem Gewindezapfen 10 zur Aufnahme des Werkzeuges 4 versehen.

An ihrem proximalen Ende trägt die Welle 8 eine Riemenscheibe 11 mit einer Spurrille 12. Die Riemenscheibe 11 ist dabei zwischen den Gabelschenkeln 6 plaziert, so daß die Spurrille 12 in der Achsebene der Lagerbolzen 7 angeordnet ist. An den äußeren Enden der Gabelschenkel 6 ist weiter jeweils ein Niederhalter 13 befestigt. Beide sind stiftförmig ausgebildet und aufeinanderzuweisend angebracht, wobei sie sich im wesentlichen parallel zu der Achse der Lagerbolzen 7 und in einer Ebene unmittelbar neben der Riemenscheibe 11 erstrecken.

Schließlich sind an dem Kopf 3 Verstellmittel 14 angelenkt, die exzentrisch zu der Achse der Lagerbolzen 7 angreifen und später näher beschrieben werden.

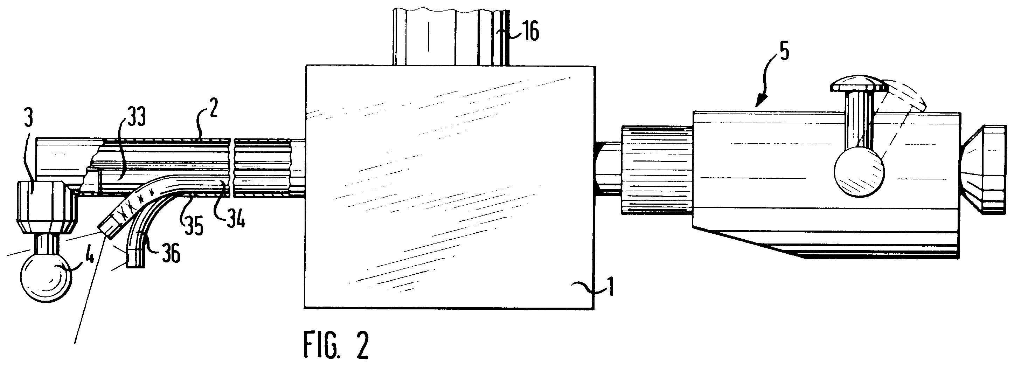

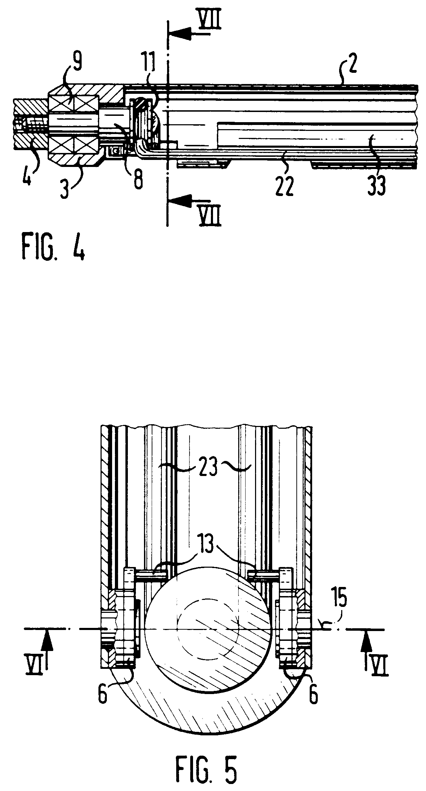

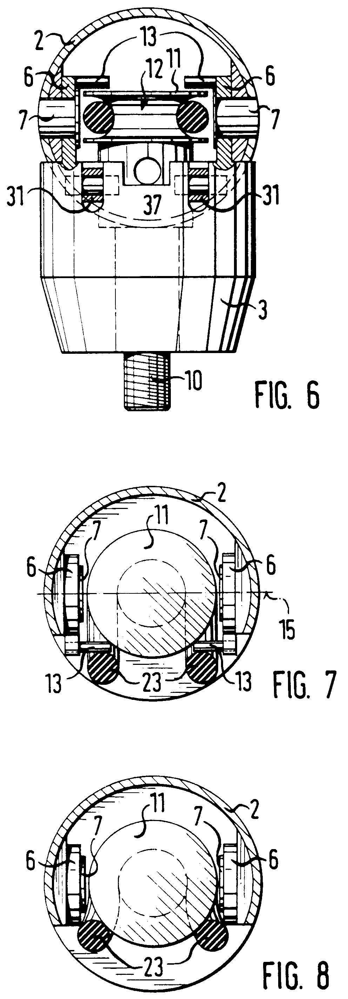

Die Lagerbolzen 7 greifen von innen in Bohrungen, die im distalen Endbereich des Schaftes 2 und diesen dabei quer zu und in der Ebene seiner Längsachse durchdringend eingebracht sind. Damit bilden die Lagerbolzen 7 mit ihrer Achse eine Schwenklagerung 15, um die der Kopf 3 schwenkbar ist und zwar zwischen einer Stellung, in der der Kopf 3 mit dem Schaft 2 fluchtet (Figuren 4 und 7) und einer gegenüber diesem um 90° abgewinkelten Stellung (Figuren 1 bis 3). Das Gehäuse 1 ist, wie aus Figuren 1 und 2 ersichtlich, als Handhabe ausgebildet, an der seitlich ein Elektromotor 16 angebracht ist, der mit seiner Welle 17 in das Gehäuse 1 hineinragt. Der Motor 16 ist mit einem Lagerschild 18 versehen, das zwischen einem Paar Klemmleisten 19 in Längsrichtung des Gehäuses 1 geführt ist, so daß der Motor 16 in dieser Richtung verstellbar und jeweils fixierbar ist. Die Welle 17 ist mit einer Riemenscheibe 20 bestückt, deren Spurrille 21 in einer Ebene liegt, die sich durch den Hohlraum des Schaftes 2 erstreckt. Um diese Riemenscheibe 20 ist ein endloser Rundriemen 22 geführt, der den Schaft 2 mit seinen beiden Zugsträngen 23 durchläuft und am anderen Ende die Riemenscheibe 11 umschlingt und durch entsprechende Verstellung des Motors 16 spannbar ist.

In dem Gehäuse 1 ist weiter ein Schieber 24 längs verschiebbar geführt. Der Verschiebeweg wird durch einstellbare Anschläge 27 und 28 in den beiden Stirnwänden 25 und 26 des Gehäuses 1 begrenzt. An dem Schieber 24 ist eine Verstellspindel 29 befestigt, die aus der rückwärtigen Stirnwand 26 herausgeführt ist und durch Drehung einer axial gesicherten Rändelmutter 30 hin und her bewegbar ist. An dem Schieber 24 greifen die erwähnten Verstellmittel 14 proximalseitig an, die aus einem Paar Betätigungsstangen 31 bestehen. Der Anschlag 28 wird durch einen induktiven Näherungsschalter gebildet, der bei Betätigung durch Anlage des Schiebers 24 an diesem die Aktivierung des Motors 16 erlaubt.

Das Technoskop 5 ist durch eine Aufnahme 32 in der rückwärtigen Stirnwand 26 des Gehäuses 1 in dieses einschiebbar und in eingeschobener Stellung fixierbar. An die Aufnahme 32 schließt sich im Gehäuse 1 ein rohrförmiger Kanal 33 an, der sich innen in dem Schaft 2 bis in die Nähe des distalen Schaftendes fortsetzt und dem Technoskopschaft 34 zur Führung dient. Im Endbereich des Kanals 33 ist ein seitliches, auch den Schaft 2 durchdringendes Fenster 35 vorgesehen. Im Falle der Verwendung eines starren Technoskops 5 dient dieses Fenster 35 dem freien Ausblick einer Seitenoptik und/oder Beleuchtung, und bei Benutzung eines flexiblen Technoskops mit biegesteuerbarer Spitze 36 als Austrittsöffnung für diese (Figur 2).

Für den Einsatz des erfindungsgemäßen Instrumentes wird zunächst der Kopf 3 in seine mit dem Schaft 2 fluchtende Ruhestellung gebracht. Das geschieht durch entsprechende Drehung der Rändelmutter 30 an der hinteren Stirnwand 26 des Gehäuses 1 mit der Wirkung, daß der Schieber 24 gegen den vorderen Anschlag 27 verlagert wird. Dabei wird diese Verlagerung über die Betätigungsstangen 31 auf den Kopf 3 übertragen, so daß auf diesen wegen des exzentrischen Angriffs der Stangen 31 ein Schwenkmoment einwirkt, welches die gewünschte Verstellung zur Folge hat. Der Kopf 3 wird sodann mit einem geeigneten Werkzeug 4 bestückt, zu welchem Zweck eine Drehfixierung der Welle 8 durch einen Hilfsstift möglich ist, der durch eine die Welle 8 quer durchsetzende Bohrung 37 (Figur 6) hindurchsteckbar ist. Bei der Verstellung des Kopfes 3 in die zum Schaft 2 fluchtende Stellung haben sich die Niederhalter 13 unmittelbar neben der Riemenscheibe 11 auf die beiden Zugstränge 23 des Rundriemens 22 aufgelegt und diese mit fortschreitender Verschwenkung mitgenommen, wobei die Umschlingung der Riemenscheibe 11 wegen der lageunveränderlichen Zuordnung von Riemenscheibe 11 und Niederhalter 13 erhalten bleibt.

Wie Figur 4 zeigt, werden dadurch die beiden Zugstränge 23 in der Ruhestellung des Kopfes 3 gegenüber dem die Riemenscheibe 11 umschlingenden Teil des Rundriemens 22 rechtwinklig abgewinkelt, ohne daß dieser die Spurrille 21 verläßt.

Das Instrument kann nun durch ein zum Zwecke der Inneninspektion vorgesehenes Inspektionsloch eingeschoben werden. Nach dem Einführen wird durch erneutes Drehen der Rändelmutter 30, diesmal in gegenläufiger Richtung, der Schieber 24 auf den hinteren Anschlag 28 zubewegt mit der Folge, daß der Kopf 3 über die Betätigungsstangen 31 gezogen aus seiner Ruhestellung ausgeschwenkt wird. Der Verschiebeweg des Schiebers 24 ist so gemessen, daß bei seiner Anlage am Anschlag 28 der Kopf 3 eine Schwenkung von 90° vollzogen hat. Dabei haben sich die Niederhalter 13 kurz vor Vollendung der 90°-Schwenkung von den Zugsträngen 23 gelöst, so daß der Rundriemen 22 nunmehr freigeht. Dies ist auch die Stellung, in der der Motor 16 aktivierbar ist, da der Schieber 24 durch seine Anlage an dem den Anschlag 28 bildenden induktiven Nährungsschalter geschlossen hat. Damit kann der Motor 16 eingeschaltet werden, was beispielsweise über einen fuß- oder handbetätigbaren Schalter geschehen kann. Die durchzuführende Bearbeitung kann durch Hin- und Herführen sowie Schwenken des Instruments um seinen Schaft 2 erfolgen, wobei eine Beobachtung des Bearbeitungsortes über das Technoskop 5 in üblicher Weise möglich ist.

Wie die Figur 8 zeigt, können die Niederhalter 13 entfallen, wenn die Gabelschenkel 6 mit so engem Abstand neben der Riemenscheibe 11 angeordnet werden, daß sie bei Verstellung des Kopfes 3 aus einer abgewinkelten Position in die Einführstellung gegen die Riemen 22 bzw. die Zugstränge 23 zur Anlage gelangen und ein Abspringen des Riemens von der Riemenscheibe verhindern.

## Patentansprüche

1. Instrument zum Bearbeiten der Oberfläche von Teilen in technischen Hohlräumen mit einem Werkzeug (4) unter gleichzeitig möglicher Betrachtung des Bearbeitungsortes mit einer Optik (5), bestehend aus einem starren, die Optik aufnehmenden Schaft (2), an dem distal ein Kopf (3) angelenkt ist, der das Werkzeug (4) trägt und relativ zur Längsachse des Instrumentes verschwenkbar ist, wobei das Werkzeug (4) mit einem Antrieb (16) über durch den Schaft (2) verlaufende Kraftübertragungsmittel antreibbar ist, dadurch gekennzeichnet, daß das Werkzeug (4) in an sich bekannter Weise rotierend antreibbar ist, daß die Kraftübertragungsmittel aus einem Riemen (22) bestehen, der um eine auf der Welle (17) des Antriebes (16) sitzende erste Riemenscheibe (20) und um eine zweite Riemenscheibe (11) verläuft, die am Kopf (3) angeordnet und mit diesem verschwenkbar ist, daß die zweite Riemenscheibe (11) und das Werkzeug (4) auf gleicher Drehachse liegen, daß beide Riemenscheiben (11, 20) bei um 90° zur Instrumentenlängsachse verschwenkter Position des Kopfes (3) in gleicher Ebene liegen und daß Mittel (6, 13) vorgesehen sind, die ein Abspringen des Riemens (22) von der zweiten Riemenscheibe (11) bei anderen Positionen des Kopfes (3) verhindern.

2. Instrument nach Anspruch 1, dadurch gekennzeichnet, daß der Kopf (3) über eine Schwenklagerung (15) mit dem Schaft (2) verbunden und zwischen einer mit diesem fluchtenden Ruhestellung und einer um 90° abgewinkelten Betriebsstellung verschwenkbar ist, wobei die Schwenkbetätigung des Kopfes (3) durch an diesem exzentrisch zu dessen Schwenklagerung (15) angreifende Verstellmittel (14) erfolgt, die durch den Schaft (2) verlaufen.

3. Instrument nach Anspruch 2, dadurch gekennzeichnet, daß die Verstellmittel (14) mindestens eine Betätigungsstange (31) umfassen, die an ihrem proximalen Ende mit einem Schieber (24) verbunden ist, der in einem Gehäuse (1) des Instruments geführt ist und der mittels einer Verstellspindel (29) zwischen einstellbaren Anschlägen (27, 28) in Achsrichtung des Schaftes (2) verstellbar ist, wobei der vordere Anschlag (27) die Ruhestellung und der hintere Anschlag (28) die Arbeitsstellung des Kopfes (3) bestimmt.

4. Instrument nach einem der Ansprüche 1 bis 3, dadurch gekennzeichnet, daß der Antrieb des Werkzeuges (4) über den Riemen (22) durch einen Elektromotor (16) erfolgt, der zum Spannen des Riemens (22) an dem Gehäuse (1) in Achsrichtung des Schaftes (2) längs verstellbar geführt und fixierbar ist.

5. Instrument nach einem der Ansprüche 1 bis 4, dadurch gekennzeichnet, daß der hintere Anschlag (28) als Schalter ausgebildet ist, der bei Betätigung durch Anlage des Schiebers (24) an dem Schalter die Aktivierung des Motors (16) erlaubt.

6. Instrument nach einem der Ansprüche 1 bis 5, dadurch gekennzeichnet, daß der Kopf (3) an seinem proximalen Ende als Gabel ausgebildet ist, deren Gabelschenkel (6) jeweils einen Lagerbolzen (7) aufnehmen, deren Achsen miteinander fluchten und die Schwenkachse der Schwenklagerung (15) bilden, und daß der Kopf (3) eine gelagerte Welle (8) aufnimmt, deren Achse mit der Längsachse des Kopfes (3) zusammenfällt, wobei die Welle (8) an ihrem distalen Ende Mittel (10) zur Aufnahme des Werkzeuges (4) aufweist und an ihrem proximalen Ende die zweite Riemenscheibe (11) trägt, wobei diese zwischen den Gabelschenkeln (6) des Kopfes (3) und mit ihrer Spurrille (12) in der Ebene der Achse der Schwenklagerung (15) angeordnet ist.

7. Instrument nach einem der Ansprüche 1 bis 6, dadurch gekennzeichnet, daß dem proximalen Endbereich jedes Gabelschenkels (6) des Kopfes (3) ein Niederhalter (13) zugeordnet ist, wobei die Niederhalter (13) sich quer zu den Zugsträngen (23) des die zweite Riemenscheibe (11) umschlingenden Riemens (22) und dabei jeweils einen Zugstrang (23) überragend erstrecken.

8. Instrument nach einem der Ansprüche 1 bis 6, dadurch gekennzeichnet, daß die Gabelschenkel (6) die Mittel zum Verhindern des Abspringens des Riemens (22) von der zweiten Riemenscheibe (11) bilden.

9. Instrument nach einem der Ansprüche 1 bis 8, dadurch gekennzeichnet, daß die zur Betrachtung des Beobachtungsortes vorgesehene Optik (5) in einen in dem Schaft (2) angeordneten gesonderten Kanal (33) einführbar ist, welcher distalwärts vor der Schwenklagerung (15) des Kopfes (3) endet und in diesem Endbereich ein seitliches Fenster (35) aufweist, welches dem Austritt einer biegesteuerbaren, flexiblen Spitze (36) eines als Optik verwendeten Technoskops oder bei Anwendung eines starren Technoskops dem freien Ausblick einer Seitenoptik und/oder Beleuchtung dient.

## Claims

1. An instrument for machining the surfaces of components in technical cavities using a tool (4) able to be viewed in real time at the machining location with an optic (5), comprising a rigid shank (2) which receives the optic and on which a head (3) is distally coupled, said head accomodating the tool (4) and being pivotable relative to the longitudinal axis of the instrument, said tool (4) being drivable with a drive (16) via power transmission means running through the shank (2), characterised in that the tool (4) is rotatably drivable in a manner known per se, that the power transmission means comprises a belt (22) passed around a first pulley (20) which is located on the shaft (17) of the drive (16) and a second pulley (11) which is arranged on the head (3) and which is pivotable together with the head, that the second pulley (11) and the tool (4) lie on the same rotational axis, that both pulleys (11, 20) lie in the same plane when the position of the head (3) is pivoted about 90° to the longitudinal axis of the instrument and that means (6, 13) are provided to prevent the detaching of the belt (22) from the second pulley (11) at other positions of the head (3).

2. An instrument according to claim 1, characterised in that the head (3) is connected to the shank (2) via a drag bearing arrangement (15) and is pivotable between a rest position aligned to the shank and a 90° right-angled operating position, the pivoting operation of the head (3) being effected by adjusting means (14) which engage with the head eccentrically to its drag bearing arrangement (15) and running through the shank (2).

3. An instrument according to claim 2, characterised in that the adjusting means (14) comprise at least one operating rod (31) which, at its proximal end, is connected to a slide (24) which is guided in a housing (1) of the instrument and by means of an adjusting spindle (29) is adjustable in the axial direction of the shank (2) between two stops (27, 28) which can be set, the front stop (27) determining the rest position and the rear stop (28) determining the operating position of the head (3).

4. An instrument according to one of claims 1 to 3, characterised in that the drive of the tool (4) is effected via the belt (22) by way of an electric motor (16) which for tensioning the belt (22) is longitudinally adjustably guided and fixable on the housing (1) in the axial direction of the shank (2).

5. An instrument according to one of claims 1 to 4, characterised in that the rear stop (28) is formed as a switch which operates when pressed upon by the slide (24) and permits activation of the motor (16).

6. An instrument according to one of claims 1 to 5, characterised in that the head (3) is formed as a fork at its proximal end, the legs (6) of the fork each receiving a bearing bolt (7) of which the axes are aligned to one another and form the pivoting axis of the drag bearing arrangement (15), and that the head (3) accomodates a mounted shaft (8) whose axis coincides with the longitudinal axis of the head (3), said shaft (8) comprising means (10) at its distal end for receiving the tool (4) and at its proximal end carries the second pulley (11), said second pulley being arranged between the legs (6) of the fork and with its groove (12) arranged in the plane of the axis of the drag bearing arrangement (15).

7. An instrument according to one of claims 1 to 6, characterised in that a holding-down device (13) is associated with the proximal end region of each of the legs (6) of the forks of the head (3), said holding-down devices (13) extending cross-wise above the tension lines (23) of the belt (22) looped around the second pulley (11), thereby extending over each tension line (23).

8. An instrument according to one of claims 1 to 6, characterised in that the legs of the fork (6) form the means for preventing the detaching of the belt (22) from the second pulley (11).

9. An instrument according to one of claims 1 to 8, characterised in that the optic (5) for viewing the observation position can be inserted into a separate lumen (33) arranged in the shank, said lumen distally ending in front of the drag bearing arrangement (15) of the head (3) and comprising, in this end region, a lateral window (35) which serves the exit of bendably controllable flexible tip (36) of a technoscope used as an optic or, when using a rigid technoscope, allows the free view of a lateral optic and/or illumination.

## Revendications

1. Instrument pour traiter la surface de pièces dans des espaces creux techniques à l'aide d'un outil (4) avec observation simultanée possible de l'endroit de traitement à l'aide d'un objectif (5), constitué par une tige rigide (2) dans laquelle vient se loger l'objectif, à laquelle est articulée en position distale, une tête (3) qui porte l'outil (4) et qui peut pivoter par rapport à l'axe longitudinal de l'instrument, dans lequel l'outil (4) peut être entraîné avec un entraînement (16) à l'aide d'organes de transmission de forces s'étendant à travers la tige (2), caractérisé en ce que l'outil (4) peut être entraîné en rotation d'une manière connue en soi, en ce que les organes de transmission de forces sont constitués par une courroie (22) oui s'étend autour d'une première poulie de courroie (20) qui s'appuie sur l'arbre (17) de l'entraînement (16) et autour d'une seconde poulie de courroie (11) qui est disposée sur la tête (3) et qui peut pivoter avec cette dernière, en ce que la seconde poulie de courroie (11) et l'outil (4) se situent dans le même axe de rotation, en ce que les deux poulies de courroies (11, 20) se situent dans le même plan lorsque la tête (3) se trouve dans une position dans laquelle elle a pivoté de 90° par rapport à l'axe longitudinal de l'instrument, et en ce qu'on prévoit des moyens (6, 13) qui empêchent la courroie (22) de sauter de la seconde poulie de courroie (11) dans les autres positions de la tête (3).

2. Instrument selon la revendication 1, caractérisé en ce que la tête (3) est reliée à l'arbre (2) par l'intermédiaire d'un palier de pivotement (15) et peut pivoter entre une position dans laquelle elle se trouve à fleur avec ce dernier et une position de service dans laquelle elle a pivoté de 90°, le mouvement de pivotement de la tête (1) ayant lieu à l'aide d'un moyen de déplacement (14) qui vient s'engrener sur cette dernière en position excentrique par rapport à son palier de pivotement (15), qui s'étend à travers l'arbre (2).

3. Instrument selon la revendication 2, caractérisé en ce que les moyens de déplacement (14) englobent au moins une tige d'actionnement (31) qui est reliée à son extrémité proximale à un coulisseau (24) qui est guidé dans un logement (1) de l'instrument et qui peut se déplacer au moyen d'une broche de déplacement (29) entre des butées réglables (27, 28), dans la direction axiale de l'arbre (2), la butée avant (27) déterminant la position de repos et la butée arrière (28) déterminant la position de travail de la tête (3).

4. Instrument selon l'une quelconque des revendications 1 à 3, caractérisé en ce que l'entraînement de l'outil (4) a lieu par l'intermédiaire des courroies (22) à l'aide d'un moteur électrique (16) qui, pour tendre la courroie (22), est guidé de manière à pouvoir se déplacer en direction longitudinale contre le logement (1) dans la direction axiale de la tige (2) et qui peut être fixé.

5. Instrument selon l'une quelconque des revendications 1 à 4, caractérisé en ce que la butée arrière (28) est réalisée en forme de commutateur qui, lors de sa mise en circuit, permet l'activation du moteur (16) par contact du coulisseau (24) sur le commutateur.

6. Instrument selon l'une quelconque des revendications 1 à 5, caractérisé en ce que la tête (3) est réalisée, à son extrémité proximale, en forme de fourche dans les branches (6) de laquelle vient se loger respectivement un boulon de support (7) dont les axes sont mutuellement à fleur et forment l'axe de pivotement du palier de pivotement (15), et en ce qu'un arbre (8) vient se loger dans la tête (3), dont l'axe se confond avec l'axe longitudinal de la tête (3), l'arbre (8) présentant, à son extrémité distale, des moyens (10) pour le logement de l'outil (4) et portant, à son extrémité proximale, la seconde poulie de courroie (11), celle-ci étant disposée entre les branches (6) de la fourche de la tête (3) et avec son ornière de guidage (12) dans le plan de l'axe du palier de pivotement (15).

7. Instrument selon l'une quelconque des revendications 1 à 6, caractérisé en ce qu'un serre-flan (13) est attribué au domaine terminal proximal de chaque branche de fourche (6) de la tête (3), les serre-flans (13) s'étendant transversalement par rapport aux brins de traction (23) de la courroie (22) entourant la seconde poulie de courroie (11) et en faisant, en l'occurrence, saillie respectivement par rapport à un brin de traction (23).

8. Instrument selon l'une quelconque des revendications 1 à 6, caractérisé en ce que les branches de fourche (6) forment les agents pour empêcher que la courroie (22) ne saute de la seconde poulie de courroie (11).

9. Instrument selon l'une quelconque des revendications 1 à 8, caractérisé en ce que l'objectif (5) prévu pour observer l'endroit de travail peut être guidé dans un canal séparé (33) disposé dans la tige (2), qui se termine en direction distale avant le palier de pivotement (15) de la tête (3) et qui présente, dans cette zone terminale, une fenêtre latérale (35) qui sert à la sortie d'une pointe flexible qui peut être commandée en flexion sous la forme d'un "technoscope" utilisé comme objectif ou bien, lors de l'utilisation d'un "technoscope" rigide, à la vision libre d'un objectif latéral et/ou d'un éclairage.
